# EUROPÄISCHE PATENTANMELDUNG

(11) **EP 1 160 806 A2**
(43) Veröffentlichungstag der Anmeldung: **05.12.2001**
(21) Anmeldenummer: 01111382.6
(22) Anmeldetag: 10.05.2001
(51) Int. Cl.: H01F 7/08

(54) **Ventilsteuergerät**

(30) Priorität: 30.05.2000 DE 10026570
(71) Anmelder: Conti Temic microelectronic GmbH, 90411 Nürnberg (DE)
(72) Erfinder: Altenrenger, Urban, 85057 Ingolstadt (DE); Binder, Markus, 85092 Kösching (DE); Dorfinger, Georg, 85080 Geimersheim (DE); Hoffmann, Richard, 85080 Geimersheim (DE); Kring, Willy, 85049 Ingolstadt (DE); Schirmer, Klaus, 85049 Ingolstadt (DE); Schlenker, Roberto, 85057 Ingolstadt (DE)
(74) Vertreter: Kolb, Georg

(57) **Zusammenfassung**

1. Ventilsteuergerät
2.1. Bisherige Ventilsteuergeräte sind in Gehäusen aufgebaut, die neben den Ventilspulen auch das komplette loch beherbergen.
2.2. Um den Montageaufwand und das Spiel der Ventildome im Spuleninnern zu reduzieren, werden Jochanordnungen von außen am Gehäuse angebracht.
2.3. Derartige Ventilsteuergeräte eignen sich für Anti-Blockier-Systeme, Anti-Schlupf-Regelungen, elektronische Bremskraftverstärkungen und elektronische Stabilisierungs-Programme im Kraftfahrzeug.

## Beschreibung

Die Erfindung **betrifft** ein Ventilsteuergerät gemäß dem Oberbegriff des Patentanspruchs 1. Ein solches Ventilsteuergerät ist beispielsweise ein elektronisches Steuergerät für ein Antiblockiersystem (ABS) in einem Kraftfahrzeug, bei dem die Bremsflüssigkeit, welche die Radbremsen betätigt, mit zwei Ventilen pro Rad gesteuert wird. Die Ventile werden durch einen Elektromagneten betätigt.

Ein bekanntes ABS-System, wie in der **EP 0499 670 A1** beschrieben, weist ein Gehäuse mit einem Gehäuserahmen und einem Deckel auf. In dem Gehäuserahmen sind Ventilspulen nachgiebig eingebettet. Dies wird dadurch erreicht, dass die Ventilspulen in ihrer Lage zu dem Gehäuserahmen positioniert und die Zwischenräume mit einer Vergußmasse aufgefüllt werden. Die Bestandteile der Ventilspule, wie umwickelter Spulenkörper und diesen umgebenden Jochring werden vor der Montage in den Gehäuserahmen mit einer Vergußmasse aufgefüllt. Danach werden die Ventilspulen in das Gehäuse montiert und durch Vergießen fixiert.

**Nachteilig** hierbei ist jedoch, dass mehrere Vergussvorgänge notwendig sind. Die Vergußmasse dient hierbei nicht als Gehäusebestandteil, sondern nur zur nachgiebigen Einbettung der Spulen. Diese nachgiebige Einbettung wiederum dient nur zum Toleranzausgleich, wenn später der Ventilblock auf das Ventilsteuergerät angebracht wird. Weitere Gehäuseteile sind notwendig, um die ganze Ventilsteuerung wasserdicht zu umhüllen.

In der **DE 42 32 205 A1** werden in einem Gehäuserahmen eines Ventilsteuergerätes die Bestandteile einer Ventilspule, wie der umwickelte Spulenkörper, der Jochring und die Ventilspule selbst durch Spritzgießen mit einer Vergußmasse in einem Arbeitsgang nachgiebig eingebettet und als Gehäuseboden an einen Schaltungsträger angebracht. Auf der anderen Seite wird über den Schaltungsträger ein zusätzlicher Deckel montiert, der das Ventilsteuergerät wasserdicht verschließt.

**Nachteilig** bei diesem Ventilsteuergerät ist es, dass sowohl die Jochanordnung als auch die Spulen in einer Vergußmasse angeordnet werden müssen.

**Aufgabe der Erfindung** ist es, ein Ventilsteuergerät zu schaffen, das auf einfache und kostengünstige Weise herzustellen ist, Fertigungstoleranzen des Ventilblocks ausgleicht und somit eine leichte Montage ermöglicht.

Diese Aufgabe wird erfindungsgemäß durch ein Ventilsteuergerät mit den Merkmalen aus dem Patentanspruch 1 **gelöst**. Bei einem solchen Ventilsteuergerät ist die Jochanordnung extern am Gehäuse der Ventilsteuerung befestigt. Die Jochanordnung kann sowohl aus einem Einzeljoch, einer Jochgruppe, das heißt mehrere zusammenhängende Jochen, oder Jochbestandteilen bestehen.

Die **Vorteile** der Erfindung bestehen darin, dass eine einfache Montage möglich ist, da die Jochanordnung nachträglich, also erst nach dem Verguß oder einem anderen Verfahren zur Gehäusebildung des Ventilsteuergeräts, angebracht wird.

**Vorteilhafte Weiterbildungen** der Erfindung ergeben sich aus den Unteransprüchen. Hierbei kann die Jochanordnung beweglich gegenüber den Spulen angeordnet sein, wobei die Materialbeweglichkeit der Jochanordnung, wie sie beispielsweise bei dünnem Blech gegeben ist, ausgenutzt werden kann. Hierbei werden keine beweglichen Befestigungselemente benötigt. Der Toleranzausgleich bezüglich des Ventilblocks erfolgt dann über die Beweglichkeit der Jochanordnung und nicht ausschließlich über den Durchmesser der Jochöffnung, durch das der Ventildom des Ventilblocks geführt wird.

Die Erfindung soll nachfolgend anhand von Ausführungsbeispielen und Figuren näher erläutert werden. Die Figuren zeigen:
- Figur 1:: Ventilsteuergerät ohne Jochplatte
- Figur 2:: Spulenanordnung
- Figur 3a:: Seitenansicht Spulenkörper
- Figur 3b:: Vorderansicht Spulenkörper
- Figur 4a:: Seitenansicht Jochbügel
- Figur 4b:: Vorderansicht Jochbügel
- Figur 5:: Ventilsteuergerät mit Jochplatte
- Figur 6:: Spulenanordnung
- Figur 7a:: Seitenansicht Spulenkörper
- Figur 7b:: Vorderansicht Spulenkörper
- Figur 8a:: Seitenansicht glockenförmiges Joch
- Figur 8b:: Vorderansicht glockenförmiges Joch
- Figur 9a:: Seitenansicht U-förmiges Joch
- Figur 9b:: Vorderansicht U-förmiges Joch
- Figur 10a:: Jochplatte von unten
- Figur 10b:: Schnittdarstellung der Jochplatte

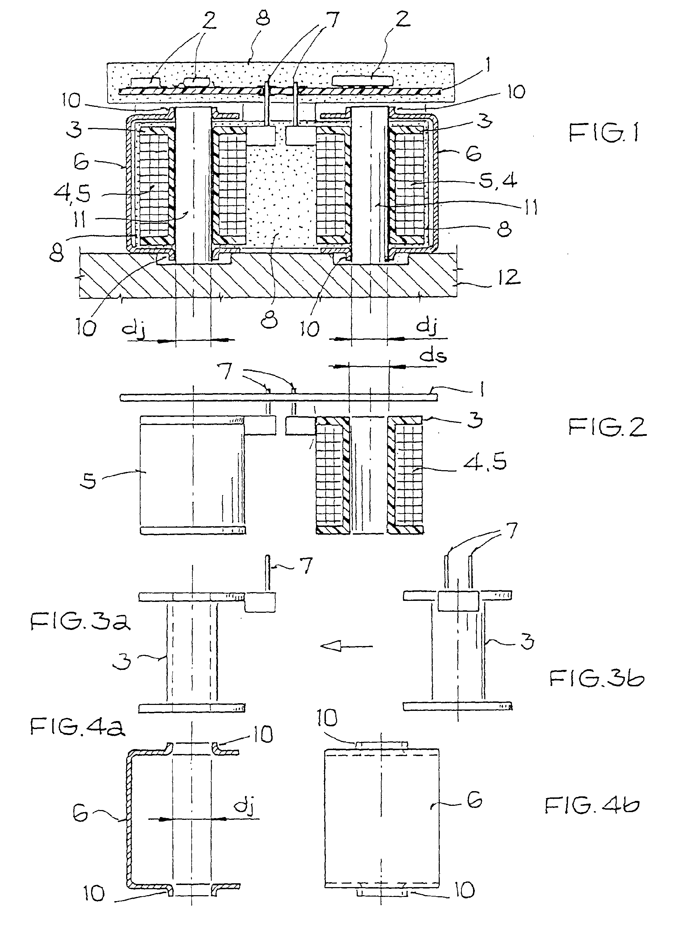

**Figur 1** zeigt ein vergossenes Ventilsteuergerät ohne Jochplatte mit angedeutetem Ventilblock **12.** In der Vergußmasse **8** befindet sich der Schaltungsträger **1,** insbesondere eine Leiterplatte, die mit den elektronischen Bauteilen **2** bestückt ist. Gleichfalls sind am Schaltungsträger **1** über die Vergußmasse Spulen **5** befestigt. Die Schutzabdeckung aus Vergußmasse ist an unterschiedlichen Stellen unterschiedlich dick und massiv. Der Zwischenraum zwischen zwei Spulen **5** ist komplett mit Vergußmasse **8** ausgefüllt. Der verbleibende Spulenbereich, also die Spulenoberseite, -unterseite und der Außenbereich sind nur mit einem dünnen Überzug von Vergußmasse **8** abgedeckt. Der Schaltungsträger **1** ist mit einer etwas dickeren Schicht Vergußmasse **8** überzogen. Die von der Vergußmasse umgebenen Spulen, auch Ventilspulen genannt, bestehen aus Spulenkörper **3** und Wicklungen **4** und stellen die Elektromagneten dar, mit denen über die Ventildome **11** die Ventile des Ventilblocks **12** betätigt werden. Die elektrischen Spulenanschlüsse **7,** die seitlich am Spulenkörper **3** angebracht sind, ragen in die Leiterplatte **1.** In dieser Abbildung sind zwei Spulen dargestellt, die sich gegenüber stehen, so dass ihre seitlich angebrachten Spulenanschlüsse **7** benachbart sind. Dieser Aufbau ist besonders platzsparend. Die Spulen und der Schaltungsträger **1** sind komplett bis auf das Spuleninnere vergossen. Im Spuleninnern ist der Spulenkörper **3** sichtbar. Der Durchmesser **d**_{**s**} im Innern der Spule ist so groß, dass die Fertigungstoleranzen bei der Herstellung des Ventilblocks damit ausgeglichen werden können und der Ventildom einfach eingeführt werden kann. Die Außenflächen des Spulenkörpers **3** und die Spulenwindungen **4** sind formschlüssig mit Vergußmasse **8** abgedeckt. Das Gehäuse aus Vergußmasse schützt alle Komponenten, insbesondere die elektronischen Bauteile **2** vor ungünstigen Umgebungsbedingungen, wie z.B. Wasser, Feuchte und Staub. Die vergossenen Komponenten, wie Spulen **5,** Schaltungsträger **1,** elektronische Bauteile **2** sind durch die Vergußmasse fixiert. Zwischen den Spulen **5** und der Leiterplatte **1** sind Aussparungen ausgebildet, in die der Jochbügel **6** nach dem Vergießen eingebracht werden kann. Der Jochbügel **6** ist im Vergleich zu den elektronischen Bauteilen **2** unempfindlich gegen Umwelteinflüsse. Er wird nicht mitvergossen, sondern nachträglich an der vergossenen Anordnung angebracht. Der Jochbügel **6,** der seitlich über die vergossene Spule geschoben wird, ist C-förmig ausgebildet und weist auf seiner Ober- und Unterseite einen Wulst **10** auf. Dabei werden die Wulste **10** des Jochbügels **6** zentrisch über dem Hohlraum, in den später der Ventildom **11** eingeführt wird, im Spulenkörper **3** positioniert. Der Jochbügel ist aus Blech und in sich beweglich. Der Innendurchmesser des Wulstes **10** des Jochbügels ist daher kleiner als Durchmesser des Hohlraums im Spulenkörperinnern. Durch die engeren Jochdurchmesser **d**_{**j**} haben die Ventildome im Spuleninnern ein kleineres Spiel und können in dem aus Toleranzgründen zu groß dimensionierten Spuleninnenraum besser geführt werden. Des weiteren ist in dieser Abbildung neben dem Ventilsteuergerät auch die Hydraulikbaugruppe **12,** also der Ventilblock abgebildet, dessen Ventildome **11** in den Spulenkörper **3** ragen.
Um ein solches vergossenes Ventilsteuergerät herzustellen, ist es sinnvoll das Vergießwerkzeug so aufzubauen, dass es gleichfalls Dome ausbildet, welche in den Spulenkörper eingebracht werden und an denen die Spulen während des Vergießvorgangs fixiert sind. Vor dem Vergießen wurden die Spulenkörper **3** mit dem Schaltungsträger **1** verbunden. Hierbei bilden die Anschlusspins **7** der Spulenkörper **3** nicht nur die elektrische, sondern auch die mechanische Verbindung, durch die zumindest teilweise der Schaltungsträger **1** im Vergießwerkzeug fixiert wird.

**Figur 2** zeigt die Spulenanordnung mit dem Schaltungsträger im unvergossenen Zustand. Die beiden abgebildeten Spulen **5** bestehen jeweils aus einem Spulenkörper **3,** auf dem die Spulenwicklungen **4** angebracht sind. Die Anschlüsse **7** der Spulen **5** sind nicht symmetrisch bezüglich der Spulenachse herausgeführt, sondern sind an der Seite angebracht. Die Spulenanschlüsse **7** werden durch die Bohrungen des Schaltungsträgers **1,** insbesondere der Leiterplatte, gesteckt und sind dann über Presskräfte bzw. Lot fixiert. Sie bilden eine feste Einheit und können zusammen vergossen werden. Ferner ist zwischen den Spulen **5** und der Leiterplatte 1 ein Freiraum. Die seitlich angebrachten Anschlüsse und der Freiraum dienen dazu, einen Platz für den Jochbügel, der in dieser Abbildung nicht dargestellt ist und der nach dem Verguss seitlich über die Spulen geschoben wird, zu schaffen.

Die **Figuren 3a** und **3b** zeigen den Spulenkörper. In **Figur 3a** als Seitenansicht und in **Figur 3b** als Vorderansicht. Die Anschlüsse **7** werden hier seitlich am Spulenkörper **3** herausgeführt. Die Anschlüsse **7** haben nicht nur die Aufgabe einen elektrischen Kontakt zwischen Schaltungsträger und Spule herzustellen, sondern stützen, wie in Figur 2 ersichtlich, die Leiterplatte während des Vergießens. Aus diesem Grund müssen die Anschlüsse **7** so dimensioniert werden, dass sie stabil genug sind, um dem Einpressprozess bzw. dem Lötprozess standzuhalten und den Schaltungsträger zu tragen. Des weiteren müssen Sie auch so angeordnet sein, dass sie dem Jochbügel nicht im Wege stehen. Der Durchmesser **d**_{**s**} des Hohlraums im Spulenkörperinnern muss so groß gewählt werden, dass die zulässigen Toleranzen, die von der Anordnung der Ventildome im Ventilblock herstammen, ausgeglichen werden können. Die vergossenen Spulenkörper mit den Wicklungen sind nämlich später in der Vergussmasse fixiert und nicht mehr beweglich angeordnet. Der Spulenkörper besteht aus Kunststoff.

Die **Figuren 4a** und **4b** zeigen den Jochbügel in verschiedenen Perspektiven. In Figur 4a in der Seitenansicht und in Figur 4b in der Vorderansicht. Wie aus den Abbildungen ersichtlich, ist der Jochbügel **6** C-förmig und weist an seiner Ober- und Unterseite jeweils einen Wulst **10** auf, in den später der Ventildom eingeführt wird. Der Jochbügel **6** wird über den Spulenkörper, entsprechend den Figuren 3a und 3b geschoben. Da der Jochbügel **6,** der aus Blech besteht, erst nach dem Vergießen angebracht wird, kann dieser auch beweglich ausgebildet sein oder gelagert werden, so dass der Innendurchmesser **d**_{**j**} der Wulste **10** nicht alle Toleranzen, die von der Anordnung der Ventildome im Ventilblock herstammen, ausgleichen muss. Der Toleranzausgleich erfolgt über die Beweglichkeit des Jochbügels **3.**

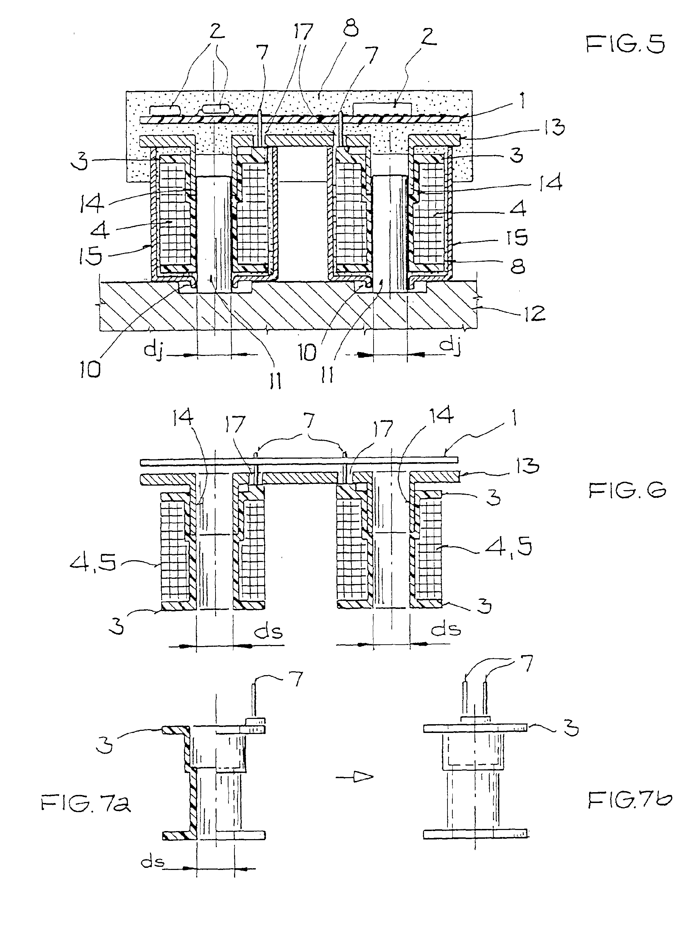

**Figur 5** zeigt ein vergossenes Ventilsteuergerät mit Jochplatte **13** und angedeutetem Ventilblock **12.** In der Vergußmasse **8** befindet sich der Schaltungsträger **1,** insbesondere eine Leiterplatte, die mit den elektronischen Bauteilen **2** bestückt ist. Gleichfalls sind am Schaltungsträger **1** Spulen befestigt, die einen Spulenkörper **3** und Wicklungen **4** aufweisen. Zwischen dem Schaltungsträger **1** und den Spulen **5** ist eine Jochplatte **13** angeordnet. Die Jochplatte **13** weist Einzüge **14** auf, auf die der Spulenkörper **3** aufgesteckt ist. Die Jochplatte **13** hat im Anwendungsbeispiel gleich zwei Funktionen. Hauptsächlich dient sie als Jochbestandteil und zum anderen als Metallkörper zur Wärmeabfuhr von auf dem Schaltungsträger **1** montierten Leistungsbauelementen. Die mit der Jochplatte **13** und dem Schaltungsträger **1** verbundenen Spulen **5** stellen die Elektromagneten dar, mit denen über den Ventildom **11** die Ventile des Ventilblocks **12** betätigt werden. Die elektrischen Spulenanschlüsse **7,** die seitlich am Spulenkörper **3** angebracht sind, ragen in die Leiterplatte **1.** In dieser Abbildung sind zwei Spulen dargestellt, die sich gegenüber stehen, so dass ihre seitlich angebrachten Spulenanschlüsse **7** benachbart sind. Dieser Aufbau ist besonders platzsparend. Die Spulen und der Schaltungsträger **1** sind komplett bis auf das Spuleninnere vergossen. Im Spuleninnern ist der innere Spulenkörper **3** sichtbar. Der Innendurchmesser dₛ der Spule ist so groß, dass damit die Fertigungstoleranzen des Ventilblocks ausgeglichen werden können und die Ventildome bei der Montage einfach in das Ventilsteuergerät eingeführt werden können. Die Außenflächen des Spulenkörpers **3** und die Spulenwindungen **4** sind formschlüssig mit Vergußmasse **8** abgedeckt. Diese vergossene Anordnung schützt alle Komponenten, insbesondere die elektronischen Bauteile **2** vor ungünstigen Umgebungsbedingungen, wie z.B. Wasser, Feuchte und Staub. Die vergossenen Komponenten, wie Spulen, Schaltungsträger **1,** Jochplatte **13** und elektronische Bauteile **2** sind durch die Vergußmasse fixiert. Die Vergußmasse **8** bildet das Gehäuse aus. Zwischen den einzelnen Spulen sind Aussparungen ausgebildet, in welche die Jochglocke **15** nach dem Vergießen eingebracht werden kann. Die Jochglocke **15** ist im Vergleich zu den elektronischen Bauteilen **2** unempfindlich gegen Umwelteinflüsse und wird nachträglich an der vergossenen und damit gehäusten Anordnung angebracht. Die Jochglocke **15,** die von oben bzw. von unten über die Spule geschoben wird, ist glockenförmig ausgebildet und weist an der einen Seite einen Wulst **10** auf. Der Jochinnendurchmesser **d**_{**j**} am Wulst ist kleiner als der Innendurchmesser **d**_{**s**} des Spuleninnenkörpers. Die Jochglocke ist aus dünnem Blech und in sich beweglich. Der Wulst **10** und der Einzug **14** der Jochplatte **13** sind zentrisch am Hohlraum des Spulenkörpers **3,** in den später der Ventildom **11** eingeführt wird, positioniert. Anstatt der Jochglocke **15,** welche die Spulenwicklung **4** komplett umschließt, kann auch ein U-förmiges Joch verwendet werden, das die vergossene Spulenwicklung an zwei Seiten nicht bedeckt. Des weiteren ist in dieser Abbildung neben dem Ventilsteuergerät auch die Hydraulikbaugruppe **12,** insbesondere der Ventilblock abgebildet, dessen Ventildome **11** in den Spulenkörper **5** ragen. Aufgrund der Fertigungstoleranzen bei der Herstellung des Ventilblocks hat der Ventildom im Innern der Spule ein Spiel.
Vor dem Vergießen wurden die Spulen **5** mit dem Schaltungsträger **1** und mit der Jochplatte **13** verbunden. Hierbei bilden die Anschlusspins **7** der Spulenkörper **3** nicht nur die elektrische, sondern auch die mechanische Verbindung, durch die zumindest teilweise der Schaltungsträger **1** im Vergießwerkzeug fixiert wird. Der Formschluss zwischen Spulenkörper **3** und dem Einzug **14** der Jochplatte **13** bildet gleichfalls eine mechanische Fixierung während des Vergießvorgangs aus.

Nach dem Verguß wird das glockenförmige Joch oder das U-förmige Joch als weiterer Jochbestandteil extern am Gehäuse angebracht.

**Figur 6** zeigt die Spulenanordnung mit dem Schaltungsträger und der Jochplatte im unvergossenen Zustand. Die beiden abgebildeten Spulen **5** bestehen jeweils aus einem Spulenkörper **3,** auf dem die Spulenwicklungen **4** angebracht sind. Die Anschlüsse **7** der Spulen **5** sind nicht symmetrisch bezüglich der Spulenachse herausgeführt, sondern sind an der Seite angebracht. Die Spulenanschlüsse **7** werden durch Öffnungen **17** der Jochplatte **13** in die Bohrungen des Schaltungsträgers **1,** insbesondere der Leiterplatte, gesteckt und sind dann über Presskräfte bzw. Lot fixiert. Die Fixierung der Jochplatte **13** erfolgt, indem die Einzüge **14** der Jochplatte **13** in den Spulenkörper **3** formschlüssig eingebracht werden. Spulenkörper **3,** Schaltungsträger **1** und Jochplatte **13,** bilden eine feste Einheit und können zusammen vergossen werden. Ferner ist zwischen den einzelnen Spulen ein Freiraum angebracht. Dieser Freiraum dient dazu, einen Platz für die Jochglocke, die in dieser Abbildung nicht dargestellt ist und die nach dem Verguss von oben bzw. von unten über die Spulen geschoben wird, zu schaffen.

Die **Figuren 7a** und **7b** zeigen den Spulenkörper. In **Figur 7a** als Seitenansicht und in **Figur 7b** als Vorderansicht. Die Anschlüsse **7** werden hier seitlich am Spulenkörper **3** herausgeführt. Die Anschlüsse **7** haben nicht nur die Aufgabe einen elektrischen Kontakt zwischen Schaltungsträger und Spule herzustellen, sondern stützen, wie in Figur 6 ersichtlich, die Leiterplatte während des Vergießens. Aus diesem Grund müssen die Anschlüsse **7** so dimensioniert werden, dass sie stabil genug sind, um dem Einpressprozess bzw. dem Lötprozess standzuhalten und den Schaltungsträger zu tragen. Des weiteren müssen Sie auch so angeordnet sein, dass sie der Jochglocke nicht im Wege stehen. Der Hohlraum im Innern des Spulenkörpers weist verschiedene Durchmesser auf. Der kleinere Durchmesser **d**_{**s**} auf der einen Seite des Hohlraums im Spulenkörperinnern muss so groß gewählt werden, dass die zulässigen Toleranzen, die von der Anordnung der Ventildome im Ventilblock herstammen, ausgeglichen werden können. Die vergossenen Spulenkörper mit den Wicklungen sind nämlich später in der Vergussmasse fixiert und nicht mehr beweglich angeordnet. Der größere Durchmesser auf der anderen Seite muss zusammen mit der Blechstärke der Einzüge der Jochplatte wieder den kleineren ergeben. Der Spulenkörper besteht aus Kunststoff.

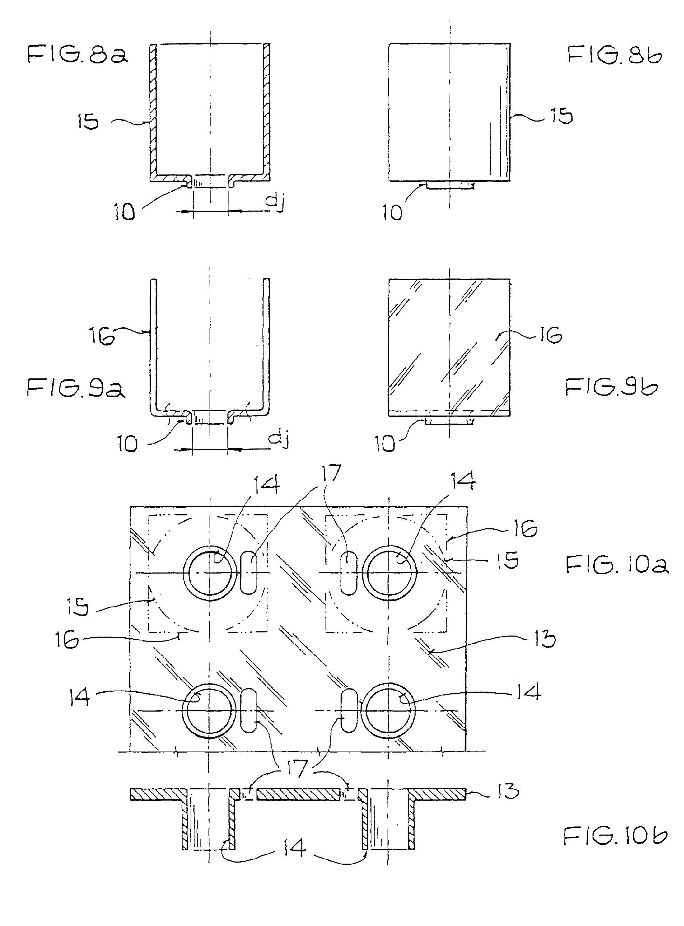

Die **Figuren 8a** und **8b** zeigen die Jochglocke in verschiedenen Perspektiven. In Figur 8a in der Seitenansicht und in Figur 8b in der Vorderansicht. Wie aus den Abbildungen ersichtlich, ist die Jochglocke **15** topfförmig und weist an der einen Seite einen Wulst **10** auf, in den später der Ventildom eingeführt wird. Die Jochglocke **15** wird über den Spulenkörper, entsprechend den Figuren 7a und 7b geschoben. Da die Jochglocke **15,** die aus Blech besteht, erst nach dem Vergießen angebracht werden kann, kann diese auch beweglich gelagert sein, so dass der Innendurchmesser **d**_{**j**} des Wulstes **10** nicht alle Toleranzen, die von der Anordnung der Ventildome im Ventilblock herstammen, ausgleichen muss. Der Toleranzausgleich erfolgt über die Beweglichkeit der Jochglocke **3.**

Die **Figuren 9a** und **9b** zeigen, anstatt einer Jochgiocke ein U-förmiges Joch **16** in verschiedenen Perspektiven. In Figur 9a in der Seitenansicht und in Figur 9b in der Vorderansicht. Wie aus den Abbildungen ersichtlich, ist das Joch **16** U-förmig, das heißt es umschließt die Spule nicht vollständig wie die Glockenform, sondern ist an zwei Seiten geöffnet. Auch dieser Aufbau weist an der einen Seite einen Wulst **10** auf, in den später der Ventildom eingeführt wird. Das U-förmige Joch **16** wird über den Spulenkörper, entsprechend den Figuren 7a und 7b, geschoben. Da das U-förmige Joch **16,** das aus Blech besteht, erst nach dem Vergießen angebracht werden kann, kann dieses auch beweglich gelagert sein, so dass der Innendurchmesser **d**_{**j**} des Wulstes **10** nicht alle Toleranzen, die von der Anordnung der Ventildome im Ventilblock herstammen, ausgleichen muss. Der Toleranzausgleich erfolgt über die Beweglichkeit des U-förmigen Jochs **16.**

**Figur 10a** zeigt die Jochplatte **13** von unten vor der Montage mit den anderen Bauteilen und dem Verguss. Auf die kreisförmigen Einzüge **14** werden die Ventilspulen gesteckt. Neben den Einzügen **14** befinden sich Öffnungen **17,** um später die Spulenanschlüsse durch die Jochplatte hindurch zum Schaltungsträger zu führen. Gleichfalls ist zur Verdeutlichung des späteren Aufbaus in dieser Abbildung der Grundriss der Jochglocke **15** und des U-förmigen Jochs **16** dargestellt, die jeweils zusammen mit der Jochplatte das Joch für eine Spule ergeben.

**Figur 10b** zeigt die Schnittdarstellung durch die Jochplatte. Die metallene Jochplatte **13** weist Einzüge **14** auf, die aus der Ebene der Jochplatte hervorstehen. Sie werden später in das Spuleninnere eingeführt. Die Öffnungen **17** in der Jochplatte **13** dienen dazu, die Spulenanschlüsse, welche die elektrische und mechanische Verbindung zum Schaltungsträger darstellen, durchzuführen.

Bei allen Anwendungsbeispielen wird das gehäuste Ventilsteuerungsgerät mit der externen Jochanordnung, wie abgebildet, ohne ein weiteres Gehäuse, zusammen mit dem Ventilblock im Kraftfahrzeug eingebaut. Das Gehäuse des Ventilsteuergerätes besteht aus Kunststoff.

## Patentansprüche

1. Ventilsteuergerät zur Steuerung eines Ventilblocks mit
- einem Gehäuse (8), welches den Schaltungsträger beinhaltet,
- mindestens einer Spule (5), die sich im gleichen Gehäuse (8) befindet, und dazu dient die Ventildome (11) des Ventilblocks (12) zu betätigen, und
- mindestens einer Jochanordnung (6, 15, 16), die über der Spule (5) angeordnet ist,
**dadurch gekennzeichnet, dass** die Jochanordnung (6, 15, 16) von außen am Gehäuse angebracht ist.

2. Ventilsteuergerät nach Patentanspruch 1, **dadurch gekennzeichnet, dass** die Jochanordnung (6, 15, 16) beweglich gegenüber der Spule (5) angeordnet ist.

3. Ventilsteuergerät nach Patentanspruch 2, wobei
- die Spule (5), einen Spulenkörper (3) beinhaltet und der Spulenkörper eine Spulenkörperöffnung zur Aufnahme des Ventildoms aufweist und
- die Jochanordnung eine Jochöffnung zur Aufnahme des Ventildoms aufweist,
**dadurch gekennzeichnet, dass** der Durchmesser (dₛ) der Spulenkörperöffnung größer ist als der Durchmesser (dₗ) der Jochöffnung.

4. Ventilsteuergerät nach Patentanspruch 1, **dadurch gekennzeichnet, dass** eine glockenförmige Jochanordnung (15) über der Spule (5) angeordnet ist.

5. Ventilsteuergerät nach Patentanspruch 1, **dadurch gekennzeichnet, dass** eine U-förmige Jochanordnung (16) über der Spule (5) angeordnet ist.

6. Ventilsteuergerät nach Patentanspruch 1, **dadurch gekennzeichnet, dass** eine C-förmige Jochanordnung (6) seitlich an der Spule (5) angeordnet ist.
